# FASCICULE DE BREVET EUROPEEN

(11) **EP 0 713 061 B1**
(45) Date de publication et mention de la délivrance du brevet: **07.07.1999**
(21) Numéro de dépôt: 95402552.4
(22) Date de dépôt: 15.11.1995
(51) Int. Cl.: F24H 8/00

(54) **Chaudière destinée au chauffage d'un fluide de travail**
Kessel für die Heizung von Arbeitsflüssigkeit
Boiler for the heating of working fluid

(30) Priorité: 16.11.1994 FR 9413689
(43) Date de publication de la demande: 22.05.1996
(73) Titulaire: GAZ DE FRANCE, 75017 Paris (FR)
(72) Inventeur: Guillet, Rémi, F-93380 Pierrefitte (FR)
(74) Mandataire: Thévenet, Jean-Bruno

(56) Documents cités:
- GB-A- 2 031 572
- GB-A- 2 112 517
- REVUE DE L'INSTITUT FRANCAIS DU PETROLE, vol. 48, no. 2, 1 Mars 1993 pages 147-157, XP 000367271 GREHIER A ET AL 'ECHANGEUR DE CHALEUR ET DE MATIERE A PAROI POREUSE APPLICATION EN RECUPERATION SUR FUMEES'

## Description

La présente invention concerne une chaudière destinée au chauffage d'un fluide de travail, comprenant une enceinte à l'intérieur de laquelle pénètre au moins une partie d'un circuit de circulation du fluide de travail, et un foyer qui est situé à l'intérieur de l'enceinte et dans lequel un gaz combustible est soumis à une combustion.

On connaît déjà différentes technologies utilisées pour des chaudières destinées au chauffage d'un fluide de travail et notamment des chaudières servant à la production d'eau chaude destinée au chauffage ou pour la production d'eau chaude sanitaire.

Depuis quelques années, des efforts sont faits pour améliorer les performances énergétiques et écologiques de ces générateurs de chaleur.

Lorsque le combustible l'autorise, des récupérateurs de tous types sont suggérés par les constructeurs, voir GB-A-2 031 572, pour améliorer le rendement thermique de ces machines.

Les récupérateurs proposés sont toutefois généralement des éléments additionnels qui sont encombrants, coûteux et induisent des pertes de charge importantes.

De plus, dans les dispositifs existants, des flammes souvent très chaudes, généralement recherchées pour un meilleur transfert, notamment dans le foyer, génèrent beaucoup d'oxydes d'azote.

Afin d'améliorer les performances énergétiques et écologiques de ces générateurs, on a déjà proposé la mise en oeuvre d'une pompe à vapeur d'eau qui constitue un échangeur ultime permettant l'échange massique et thermique entre les gaz de combustion sortant d'un générateur de chaleur et l'air comburant avant son arrivée au brûleur. Dans ce cas, la quasi-totalité de l'enthalpie des gaz de combustion, chaleur sensible et latente, se voit récupérée, y compris lorsque le récupérateur à condensation de la pompe à vapeur est irrigué par un fluide entrant relativement chaud dont la température est supérieure à environ 60°C, par exemple (température de rosée eau en combustion stoechiométrique du méthane).

L'effet Pompe à Vapeur d'Eau est généralement bénéfique au plan écologique puisque la vapeur recyclée avec l'air comburant abaisse la température adiabatique de combustion ainsi que le taux d'oxygénation de l'air comburant. Or, ces deux facteurs ont un rôle très important sur la formation des oxydes d'azote (NOX).

Les pompes à vapeur d'eau ont toutefois également été conçues la plupart du temps comme des ensembles séparés qui sont rapportés à côté de générateurs de chaleur plus traditionnels, ce qui augmente le coût, l'encombrement, les pertes de charge et ne permet pas d'optimiser l'ensemble du processus de production de chaleur.

Dans certains pays, l'approche technologique des générateurs à eau chaude a également donné lieu au développement de générateurs à contact direct (entre produits de combustion chauds et un circuit d'eau). Ceci est particulièrement vrai dans le cas de chauffage d'eau de procédés fonctionnant en boucle ouverte. Dans ce cas, ce type de générateur peut devenir très intéressant tant au plan de l'investissement qu'au plan de l'exploitation puisque l'eau entrante a généralement une température très faible proche de la température ambiante extérieure et puisqu'il n'y a pas d'échangeur à paroi entre les gaz de combustion et le fluide de travail.

De plus, le refroidissement toujours rapide des produits en réaction chimique a tendance à avoir l'effet d'une "trempe" de la flamme, trempe qui favorise également la diminution de la formation des NOX.

Deux conditions doivent cependant être scrupuleusement respectées pour envisager l'exploitation des générateurs à contact direct :
- l'une concerne la compatibilité chimique entre les gaz de combustion et le fluide de travail,
- l'autre concerne la température du fluide de travail entrant qui doit avantageusement rester très inférieure à la température de rosée des produits de combustion (égale par exemple à 60°C dans le cas de la combustion stoechiométrique, à la pression atmosphérique normale, du méthane).

Au-dessus de cette température de rosée, le générateur devient un générateur de vapeur (ou de gaz de combustion chargés en vapeur à la pression atmosphérique).

Hormis des applications très particulières, les générateurs de chaleur à contact direct ne peuvent donc être envisagés si la température du fluide de travail (généralement de l'eau liquide) entrant dépasse 60° C.

Les principaux inconvénients des générateurs à contacts directs sont donc justement liés à ce contact direct : problèmes de compatibilité chimique, Vaporisation du fluide de travail à proscrire dans les dernières zones d'échanges. Ces deux types de contraintes limitent considérablement le développement des générateurs à contact direct.

On connaît encore des chaudières à mazout dans lesquelles on effectue sous atmosphère humide un échange de chaleur entre les produits de combustion et un fluide de travail circulant dans des tubes dont la paroi externe est au contact avec les produits de combustion, et où on effectue en outre un échange de chaleur entre les produits de combustion humidifiés et de l'air comburant. Dans ce cas, le brûleur est toutefois disposé dans une enceinte séparée indépendante de tout circuit d'humidification.

La présente invention a précisément pour objet de remédier aux inconvénients précités et vis à optimiser au sein d'une même enceinte les processus d'échanges massiques et thermiques.

L'invention vise plus particulièrement à permettre une efficacité énergétique de la chaudière toujours maximale y compris lorsque la température du fluide de travail entrant dans la chaudière, est par exemple de l'ordre de 60° C à 80° C, tout en assurant une efficacité écologique maximale à la combustion, par limitation au plus bas de la quantité d'oxydes d'azote formés.

Ces buts sont atteints, conformément à l'invention, grâce à une chaudière destinée au chauffage d'un fluide de travail, comprenant une enceinte à l'intérieur de laquelle pénètre au moins une partie d'un circuit de circulation du fluide de travail, et un foyer qui est situé à l'intérieur de l'enceinte et dans lequel un gaz combustible est soumis à une combustion, la chaudière comprenant au moins :
a) un premier module contenant le foyer, un brûleur alimenté par ledit gaz combustible et un circuit d'eau interne pour humidifier le foyer et créer un premier niveau d'échanges massiques et thermiques consécutifs à une vaporisation, sans transfert thermique vers le fluide de travail,
b) un deuxième module comprenant un échangeur-condenseur associé à ladite partie de circuit de circulation de fluide de travail et recevant les gaz de combustion chargés en vapeur d'eau et issus du foyer du premier module, pour créer un deuxième niveau d'échanges massiques et thermiques consécutifs à une condensation transférant vers un circuit externe de circulation de fluide de travail l'énergie calorifique produite dans le premier module, sans qu'il y ait de contact direct avec les gaz de combustion et le fluide de travail, et
c) un troisième module comprenant une pompe à vapeur d'eau assurant un troisième niveau d'échanges massiques et thermiques entre les gaz de combustion issus du deuxième module et de l'air comburant introduit dans l'enceinte par une entrée d'air, des moyens étant prévus pour diriger après son passage dans le troisième module l'air comburant réchauffé et humidifié vers le premier module, afin de permettre au sein du brûleur un mélange de l'air réchauffé et humidifié et du gaz combustible.

Avantageusement, le circuit d'eau interne comprend des dispositifs d'introduction d'eau dans la partie haute du "foyer humide" et des dispositifs d'introduction d'eau en regard des parois latérales verticales du foyer, de manière à permettre une humidification de l'ensemble du flux de gaz de combustion du premier module et des parois verticales du foyer.

De préférence, le circuit d'eau interne comprend une réserve d'eau à la partie inférieure du premier module, des moyens d'évacuation du trop-plein d'eau dans ladite réserve et des moyens de prélèvement d'eau dans ladite réserve pour alimenter ledit circuit d'eau interne.

La chaudière selon l'invention constitue ainsi un générateur procédant par échanges massiques successifs sur les produits de combustion au niveau des trois modules superposés, c'est-à-dire provoquant, au niveau de chaque module, un changement de phase des produits de combustion.

Le premier échange massique et thermique, au niveau du premier module, consiste en une vaporisation.

Cet échange se développe dans le "foyer" qui devient une zone d'échanges directs entre la flamme et un environnement très humide dû à l'injection d'eau pulvérisée circulant en circuit fermé.

A ce niveau, les produits de combustion subissent l'effet d'une "trempe" et se saturent à une température voisine de 95°C. Si une surchauffe des gaz est souhaitée, le débit d'eau peut être ajusté en conséquence.

Le phénomène de trempe est essentiel au plan industriel, pour diminuer la formation des oxydes d'azote issus de la combustion avec l'air atmosphérique.

Ce premier échange en "foyer humide" ne donne donc lieu à aucun transfert thermique vers le procédé utilisateur externe ou le fluide caloporteur (fluide de travail).

Le deuxième échange massique et thermique au niveau du deuxième module consiste en une condensation.

L'energie de la combustion ayant pris la forme de gaz moyennement chauds et très riches en vapeur d'eau, le transfert de l'énergie au fluide de travail se fait uniquement via l'échangeur-condenseur intégré au générateur au niveau du deuxième module. Cet échange est exclusivement indirect.

Bien entendu, et quel que soit le matériau du condenseur, celui-ci bénéficie de coefficients de transfert thermique élevés côté gaz puisque l'échange se fait essentiellement sur les bases d'une condensation.

Le troisième échange massique et thermique au niveau du troisième module consiste essentiellement en une condensation au sein des fumées couplée à une évaporation au sein de l'air comburant.

Du fait de l'échange massique et thermique entre les gaz sortant du condenseur et l'air comburant avant son entrée dans le brûleur, l'enthalpie résiduelle contenue dans les gaz à la sortie du condenseur est recyclée avec l'air comburant, assurant une efficacité thermique maximale à la chaudière, indépendante de la température du fluide entrant dans l'échangeur-condenseur, et une efficacité écologique qui par les effets combinés de la trempe de flamme et de l'air comburant humidifié par la pompe à vapeur d'eau permet de diviser par un facteur compris entre environ 10 et 20 la quantité d'oxydes d'azote formée par comparaison avec une combustion faisant intervenir le même brûleur sans trempe de la flamme et avec de l'air atmosphérique introduit directement au niveau du brûleur.

La chaudière objet de la présente invention peut faire l'objet de différents modes particuliers de réalisation.

Ainsi, selon un premier mode de réalisation possible, le troisième module comprend un échangeur à membrane poreuse, hydrophile ou céramique poreuse, répartie en une ou plusieurs couches dont une face est en contact avec de l'air comburant introduit par ladite entrée d'air et l'autre face est en contact avec les gaz de combustion issus du deuxième module pour réaliser la fonction d'échangeur massique et thermique.

Selon un deuxième mode de réalisation possible, le troisième module comprend un échangeur tournant du type en nid d'abeille, constitué d'une plaque ondulée entre deux plaques plates et enroulées sur elles-mêmes, placé verticalement, qui reçoit à sa partie inférieure les gaz de combustion issus du deuxième module, et à sa partie supérieure de l'air comburant introduit par une entrée d'air, l'air comburant circulant à contre-courant des gaz de combustion vers lesdits moyens pour diriger l'air comburant réchauffé et humidifié vers le premier module tandis que les gaz de combustion sont évacués par une cheminée fixe à la partie supérieure de l'échangeur tournant.

Selon un troisième mode de réalisation possible, le troisième module comprend d'une part un laveur-scrubber évaporateur qui est disposé sous le premier module et est traversé de bas en haut par de l'air comburant introduit par ladite entrée d'air à une extrémité de ce laveur-scrubber évaporateur pour être ensuite évacué par lesdits moyens pour diriger l'air comburant réchauffé et humidifié vers le premier module, de l'eau étant appliquée de haut en bas au laveur-scrubber évaporateur à partir de ladite réserve d'eau située à la partie inférieure du premier module, et d'autre part un laveur-scrubber condenseur qui est disposé au-dessus du deuxième module pour être traversé de bas en haut par les gaz de combustion sortant du deuxième module et de haut en bas par de l'eau récupérée dans une réserve complémentaire à l'issue de la traversée du laveur scrubber-évaporateur.

Dans ce cas, la chaudière comprend avantageusement une plaque ondulée munie de perforations situées au voisinage du sommet des ondulations, pour définir ladite réserve d'eau au bas du foyer humide et la distribution très divisée d'eau au-dessus du laveur-scrubber évaporateur sur l'ensemble de la section de celui-ci.

La chaudière peut comprendre des moyens de pompage et de distribution pour alimenter à la fois le circuit d'eau du premier module et le circuit de distribution d'eau dans le laveur-scrubber condenseur à partir de ladite réserve complémentaire servant de bâche.

La chaudière peut encore comprendre une plaque ondulée munie de perforations situées au voisinage du sommet des ondulations, pour permettre le passage des gaz de combustion entre le deuxième module comprenant un échangeur-condenseur et le laveur-scrubber condenseur et simultanément orienter par un jeu de pente approprié l'écoulement de l'eau recueillie en partie basse du laveur-scrubber condenseur vers les parois verticales de la chaudière, afin d'éviter d'arroser l'échangeur-condenseur.

D'autres caractéristiques et avantages de l'invention apparaîtront mieux à la lecture de la description détaillée de modes de réalisation particulièrs, faite en référence aux dessins annexés sur lesquels :
- la figure 1 est une vue schématique en coupe verticale d'un premier mode de réalisation de chaudière à trois niveaux d'échanges massiques et thermiques conforme à l'invention,
- la figure 2 est une vue schématique en coupe verticale d'un deuxième mode de réalisation de chaudière à trois niveaux d'échanges massiques et thermiques conforme à l'invention,
- la figure 3 est une vue schématique en coupe verticale d'un troisième mode de réalisation de chaudière selon l'invention à trois niveaux d'échanges massiques et thermiques, le troisième échange massique étant réalisé dans des zones inférieure et supérieure prenant en sandwich les premier et deuxième niveaux d'échange massiques, et
- la figure 4 est une section selon la ligne IV-IV de la figure 2 montrant un détail de réalisation d'un échangeur tournant.

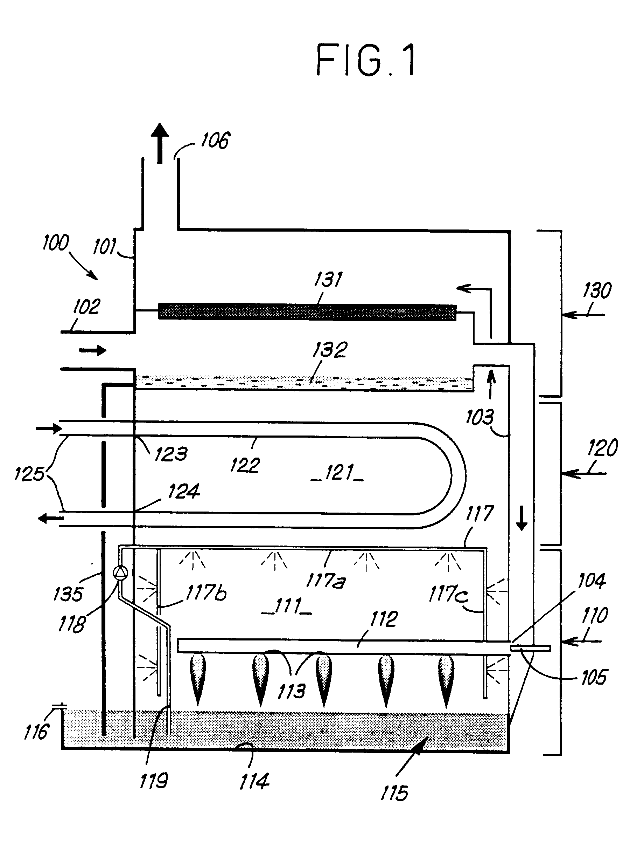

On voit sur la figure 1 un premier mode de réalisation d'une chaudière 100 destinée à assurer le chauffage d'un fluide de travail circulant dans un circuit 125 dont une partie 122 pénètre à l'intérieur de l'enceinte 101 de la chaudière, pour permettre un échange de chaleur, dans un niveau moyen de la chaudière 100, entre des produits de combustion issus d'un foyer 111 et le fluide de travail. Ce fluide de travail circulant dans le circuit 125 et dans la partie 122 se trouve dans des canalisations empêchant tout contact avec les produits de combustion.

La partie inférieure de la chaudière 100 constitue un premier module 110 comprenant le foyer 111 à la base duquel est placé un brûleur 112 qui est avantageusement constitué par une ou plusieurs rampes munies d'origices avantageusement tournés vers le bas de telle sorte que les flammes soient orientées vers le bas en direction d'une réserve d'eau 115 qui constitue une garde, dans un réceptacle 114 équipé d'une évacuation de trop-plein 116. Le brûleur 112 est équipé d'une buse 105 d'amenée de gaz combustible, tel que par exemple du gaz naturel, et d'un passage 104 d'introduction d'air comburant réchauffé et humidifié amené par un conduit 103 en provenance d'un troisième module 130 situé à la partie supérieure de la chaudière 100 et constituant une pompe à vapeur d'eau.

Un circuit d'eau interne 117 est disposé dans le premier module 110 pour humidifier le foyer 111 et créer un premier niveau d'échanges massiques en atmosphère humide sans transfert thermique vers le fluide de travail.

Le circuit d'eau interne 117 comprend des rampes horizontales de pulvérisation 117a situées à la partie supérieure du premier module 110 et possédant des buses de pulvérisation orientées vers le bas pour introduire de façon divisée de l'eau à la partie supérieure du foyer 111 et humidifier l'ensemble du flux de gaz de combustion présent dans le foyer 111.

D'autres rampes verticales de pulvérisation d'eau 117b, 117c sont disposées à l'extérieur des rampes de brûleur 112, avec des buses de pulvérisation orientées vers l'ensemble des parois verticales de l'enceinte 101 délimitant le foyer 111 de manière à humidifier les parois verticales du foyer.

Une canalisation 119 plongeant dans la réserve d'eau 115 et une pompe 118 permettent de prélever de l'eau dans la réserve 115 pour alimenter les rampes de pulvérisation 117a, 117b, 117c qui peuvent ainsi définir un circuit fermé 117, l'eau pulvérisée dans le foyer ou ruisselant sur les parois de l'enceinte 101 et non vaporisée étant récupérée dans le réceptacle 114.

Les produits de combustion issus du foyer 111 et mélangés à de la vapeur d'eau sont dirigés vers le haut à l'intérieur du deuxième module 120 qui, toujours à l'intérieur de la même enceinte 101, constitue un échangeur-condenseur 121. le fluide de travail circulant dans un circuit extérieur 125 est introduit dans la chaudière 100 au niveau de l'entrée 123 de la partie 122 du circuit de circulation de fluide de travail située dans le deuxième module 120 constituant l'échangeur-condenseur 121, et évacué de la chaudière 100 vers le circuit extérieur 125 au niveau d'une sortie 124 de la partie de circuit 122.

Le fluide de travail qui peut être de différentes natures, dès lors qu'il n'est pas en contact avec les produits de combustion issus du foyer 111, peut notamment être constitué par de l'eau d'un système de chauffage central ou de l'eau chaude sanitaire. Le rendement de la chaudière 100 n'est pas limité par le niveau de la température d'entrée du fluide de travail au niveau de l'entrée 123. Toutefois, la chaudière est particulièrement adaptée pour s'appliquer à des installations standardisées pour lesquelles le fluide de travail présente au niveau de l'entrée 123 des températures comprises entre environ 60° C et 80° C, typiquement 70° C, et au niveau de la sortie 124, des températures comprises entre environ 80° C et 95° C, typiquement 90° C.

Dans le deuxième module 120, il est ainsi créé un deuxième niveau d'échange massique transférant vers le circuit externe 125 de circulation du fluide de travail l'énergie calorifique produite dans le module inférieur 110 sans qu'il y ait de contact direct entre les produits de combustion et le fluide de travail.

A la partie supérieure de la chaudière 100 et toujours à l'intérieur de l'enceinte 101, un troisième module 130 constitue une pompe à vapeur d'eau assurant des échanges massiques et thermiques entre les gaz de combustion qui sont issus de l'échangeur-condenseur 121 et ont déjà perdu une grande partie de la vapeur d'eau qui s'est condensée mais conservent une certaine humidité, et de l'air comburant frais et relativement sec qui est introduit depuis l'extérieur de la chaudière 100 par une entrée d'air 102, et après réchauffage et humidification dans le troisième module 130 est dirigé par le conduit 103 vers l'entrée d'air 104 d'alimentation du brûleur 112 en air comburant.

Dans le mode de réalisation de la figure 1, la pompe à vapeur d'eau comprend essentiellement un échangeur 131 à membrane poreuse, hydrophile ou céramique à une ou plusieurs couches, chaque couche présentant une face en contact avec l'air comburant introduit par l'entrée d'air 102 et l'autre face en contact avec les gaz de combustion issus de l'échangeur-condenseur 121. Par exemple, les gaz de combustion amenés au contact de la face supérieure de la membrane 131 perdent l'essentiel de leur humidité résiduelle et peuvent être évacués par une cheminée de sortie 106 disposée à la partie supérieure de la chaudière 100. L'eau issue de la condensation de la vapeur d'eau résiduelle contenue dans les produits de combustion traverse la membrane 131 servant de paroi d'échange. L'eau liquide traversant la membrane assure une étanchéité aux gaz entre les deux faces de la membrane et après migration dans les pores de la membrane 131 peut se transformer en vapeur d'eau dans l'air comburant qui devient chaud et humide. En cas d'excès l'eau est récupérée dans un réceptacle 132 situé sous l'échangeur 131 et la zone de passage de l'air comburant, et renvoyée par une canalisation 135 vers le réceptacle 114 contenant la réserve d'eau 115.

La chaudière 100 à trois niveaux d'échanges massiques, par l'effet de trempe des produits de combustion au sein du foyer humidifié 111, et la présence d'un module constituant une pompe à vapeur d'eau, permet de diminuer la formation des oxydes d'azote. Par ailleurs, l'efficacité thermique du générateur est maximale comme cela a été indiqué plus haut dans la partie introductive de la description.

A titre d'exemple, avec de l'air comburant introduit à une température de l'ordre de 15° C à l'entrée d'air 102, un fluide de travail présentant une température de l'ordre de 70° C à l'entrée 123 et une température de l'ordre de 90° C à la sortie 124, les produits de combustion formés dans le foyer 111 peuvent se saturer à une température voisine de 95° C, le débit d'eau dans le circuit 117 pouvant être ajusté si une surchauffe des gaz est souhaitée. Les produits de combustion peuvent présenter une température de l'ordre de 75° C à la sortie de l'échangeur-condenseur 121 et une température de l'ordre de 58° C au niveau de la cheminée 106 après passage dans la pompe à vapeur du troisième module 130. L'air comburant introduit à environ 15°C par l'entrée d'air 102 peut ressortir du troisième module 130, dans le conduit 103 saturé en vapeur d'eau à une température de l'ordre de 65° C.

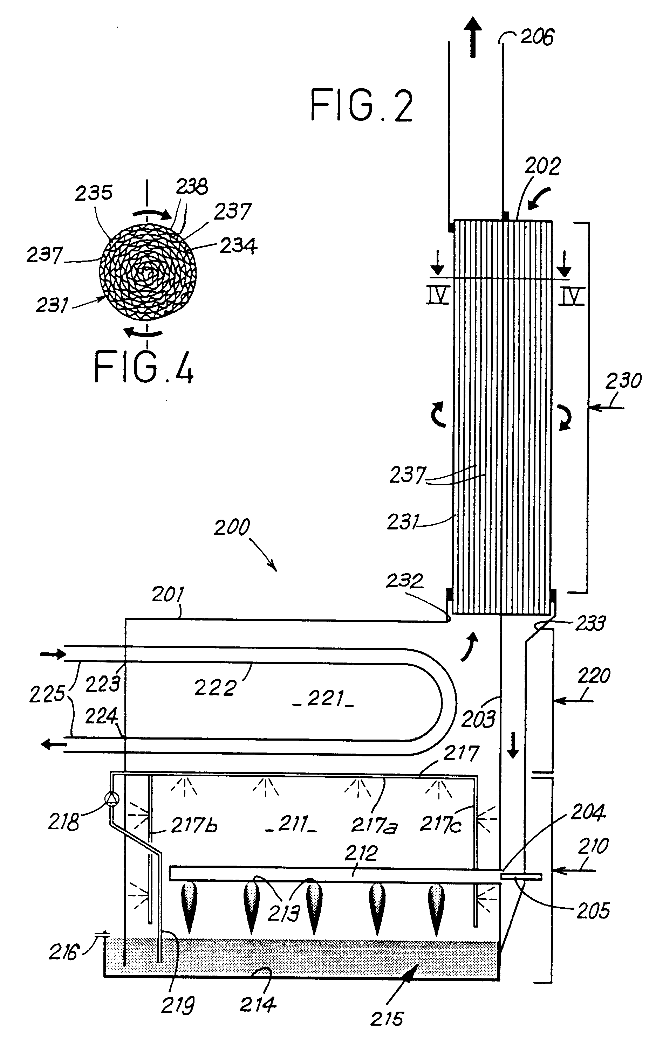

L'invention se prête à différentes variantes de réalisation. Ainsi, on a représenté sur la figure 2 une chaudière 200 dont les premier et deuxième modules 210, 220 peuvent être tout-à-fait semblables aux premier et deuxième modules 110, 120 de la chaudière 100 de la figure 1. Pour cette raison, ces modules 210, 220 ne seront pas décrits à nouveau et les différents éléments constitutifs des modules 210, 220 portent des références semblables à celles des éléments correspondants des modules 110 et 120 de la figure 1, seul le chiffre des centaines "1" ayant été remplacé par un "2".

En revanche, dans le cas de la chaudière 200 de la figure 2, le troisième module 230 ne comporte pas un échangeur à membrane poreuse, mais comprend une pompe à vapeur d'eau constituée par un échangeur tournant cylindrique 231 vertical du type en nid d'abeille constitué par des tôles ondulées 237 prises entre deux tôles plates 238 enroulées concentriquement autour de l'axe du cylindre et ménageant des passages à contre-courant pour d'une part les produits de combustion issus de l'échangeur-condenseur 221 qui circulent de bas en haut depuis une entrée fixe 232 située à la base de l'échangeur tournant 231, jusqu'à la cheminée fixe 206 située au-dessus de l'échangeur 231, et d'autre part l'air comburant introduit par une entrée d'air 202 située à la partie supérieure de l'échangeur 231 et parcourant l'échangeur 231 de haut en bas jusqu'à une sortie inférieure 233 en communication avec le conduit 203 conduisant l'air chaud et humide jusqu'à l'entrée d'air 204 voisine du brûleur 212.

La constitution de l'échangeur tournant 231 peut être mieux perçue en considérant la section illustrée sur la figure 4. Par ailleurs, les entrée 232 et sortie 206 des produits de combustion s'étendent sur la moitié de la section de l'échangeur 231 tandis que les entrée 202 et sortie 233 de l'air comburant s'étendent sur l'autre moitié de la section de l'échangeur tournant 231.

Le gaufrage ou l'ondulation 237 qui sépare les plaques enroulées 238 contribue à assurer une étanchéité entre les canaux 234 parcourus à un instant donné par de l'air comburant et les canaux 235 parcourus au même instant à contre-courant par des fumées. Seuls les canaux situés à un instant donné au voisinage d'un plan diamétral séparant la cheminée 206 et l'entrée 232 d'une part et l'entrée d'air 202 et la sortie d'air 233 d'autre part, peuvent donner lieu à un petit phénomène de mélange entre air et fumées. Ce phénomène ne concerne toutefois qu'un débit très faible qui est en rapport avec le petit nombre n de canaux concernés à chaque instant au voisinage d'un plan diamétral rapporté au grand nombre total N des canaux de l'échangeur. Le phénomène de mélange est par ailleurs limité par le fait que les deux flux de canalisation de l'air et des fumées s'opposent.

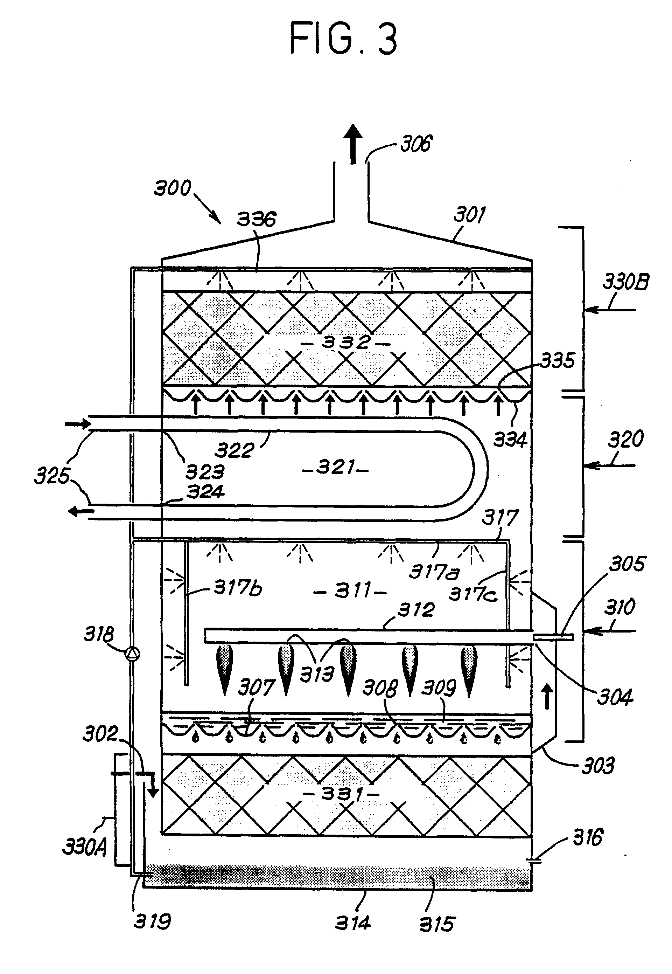

La figure 3 représente un troisième mode de réalisation possible pour une chaudière conforme à l'invention.

Dans le cas de la chaudière 300 de la figure 3, les premier et deuxième modules 310, 320 disposés à l'intérieur de l'enceinte 301 fonctionnent pour l'essentiel de la même manière que dans le cas des modes de réalisation des figures 1 et 2 et les éléments semblables, qui portent les mêmes numéros de référence avec simplement un "3" pour le chiffre des centaines au lieu d'un "1" ou d'un "2" ne seront pas décrits à nouveau de façon détaillée.

Sur la figure 3, on voit en revanche que le troisième module est divisé en deux parties 330A, 330B disposées respectivement à la partie inférieure et à la partie supérieure de la chaudière 300, prenant en sandwich les premier et deuxième modules 310, 320.

La première partie 330A du troisième module est constituée par un laveur-scrubber évaporateur comprenant un garnissage d'anneaux 331 qui est disposé sous le premier module 310 et est traversé de bas en haut par de l'air comburant introduit par une entrée d'air 302 pour être amené dans un espace libre sous le garnissage d'anneaux 331 et être évacué sous la forme d'air chaud et humide par une sortie située au-dessus du garnissage d'anneaux 331 et en communication avec un conduit 303 amenant l'air chaud dans la zone 304 d'alimentation du brûleur 312 en air comburant.

De l'eau est distribuée au-dessus du garnissage d'anneaux 331 pour circuler de haut en bas dans le laveur-scrubber évaporateur 330A en humidifiant l'air comburant. L'eau est récupérée dans un réceptacle 314 équipé d'une évacuation de trop plein 316 et constitue une réserve ou bâche 315 pour la chaudière 300. L'eau nécessaire à l'alimentation du circuit 317 d'humidification du foyer 311 peut être prélevée par une canalisation 319 à l'aide d'une pompe 318 dans la réserve 315. L'eau nécessaire à l'humidification du garnissage d'anneaux 331 peut elle-même provenir d'une réserve intermédiaire 309 située sous le brûleur 312 au niveau du premier module 310 pour constituer la réserve d'eau située sous le foyer humide 311. La réserve d'eau 309 peut être contenue sur une plaque ondulée 307 munie de perforations situées au voisinage du sommet des ondulations. L'eau nécessaire à l'humidification du laveur-scrubber évaporateur peut ainsi être distribuée sous une forme divisée à travers les ouvertures 308 ménagées dans les parties hautes de la plaque ondulée 307.

La deuxième partie 330B du troisième module est constituée par un laveur-scrubber condenseur comprenant un garnissage d'anneaux 332 qui est disposé au-dessus du deuxième module 320 et est traversé de bas en haut par les gaz de combustion sortant du deuxième module 320.

De l'eau est distribuée par une rampe 336 disposée au-dessus du garnissage d'anneaux 332 pour circuler de haut en bas dans le laveur-scrubber évaporateur 330B. L'eau est amenée à la rampe336 avantageusement depuis la réserve 315 à travers la canalisation 319 et la pompe 318.

Avantageusement, une plaque ondulée 334 munie de perforations 335 situées au voisinage du sommet des ondulations est disposée entre l'échangeur-condenseur 321 et le garnissage d'anneaux 332. Cette plaque ondulée 334 permet le passage des gaz de combustion entre l'échangeur-condenseur 321 et le garnissage d'anneaux 332 du laveur-scrubber condenseur 330B, tout en orientant simultanément l'écoulement de l'eau recueillie en partie basse du garnissage 332 vers les parois verticales de l'enceinte 301 de la chaudière 300.

Dans le mode de réalisation de la figure 3, un premier échange massique dû à une vaporisation de l'eau au sein du foyer humide 311 est réalisé comme dans le cas des modes de réalisation des figures 1 et 2, les seules différences au sein du premier module 310 résidant dans l'arrivée d'air comburant chaud et humide par le bas, et dans le fait qu'une réserve d'eau intermédiaire 309 est ménagée entre le premier module 310 et le laveur-scrubber évaporateur 330A.

Le deuxième échange massique au sein du deuxième module 320 contenant l'échangeur condenseur 321 s'effectue d'une façon tout-à-fait similaire dans l'ensemble des trois modes de réalisation des figures 1 à 3.

Le troisième échange massique au sein de la pompe à vapeur d'eau du troisième module accompagné d'un échange thermique, s'effectue également dans son principe d'une façon analogue dans les trois modes de réalisation, mais dans le cas de la figure 3, les phénomènes d'échange sont répartis dans deux zones distinctes à la base de la chaudière et au sommet de celle-ci au sein du laveur-scrubber évaporateur 330A et du laveur-scrubber condenseur 330B. Une optimisation est dans tous les cas réalisée du point de vue des échanges massiques et thermiques.

## Revendications

1. Chaudière (100) destinée au chauffage d'un fluide de travail, comprenant une enceinte (101; 201; 301) à l'intérieur de laquelle pénètre au moins une partie (122; 222; 322) d'un circuit de circulation du fluide de travail, et un foyer (111; 211; 311) qui est situé à l'intérieur de l'enceinte (101; 201; 301) et dans lequel un gaz combustible est soumis à une combustion, la chaudière comprenant au moins :
a) un premier module (110; 210; 310) contenant le foyer (111; 211; 311), un brûleur (112; 212; 312) alimenté par ledit gaz combustible et un circuit d'eau interne (117; 217; 317) pour humidifier le foyer (111; 211; 311) et créer un premier niveau d'échanges massiques et thermiques consécutifs à une vaporisation sans transfert thermique vers le fluide de travail,
b) un deuxième module (120; 220; 320) comprenant un échangeur-condenseur associé à ladite partie (122; 222; 322) de circuit de circulation de fluide de travail et recevant les gaz de combustion chargés en vapeur d'eau et issus du foyer du premier module (110; 210; 310), pour créer un deuxième niveau d'échanges massiques et thermiques consécutifs à une condensation, transférant vers un circuit externe (125; 225; 325) de circulation de fluide de travail l'énergie calorifique produite dans le premier module (110; 210; 310), sans qu'il y ait de contact direct avec les gaz de combustion et le fluide de travail, et
c) un troisième module (130; 230; 330) comprenant une pompe à vapeur d'eau (131; 231; 331, 332) assurant un troisième niveau d'échanges massiques et thermiques entre les gaz de combustion issus du deuxième module (120; 220; 320) et de l'air comburant introduit dans l'enceinte (101; 201; 301) par une entrée d'air (102; 202; 302), des moyens (103; 203; 303) étant prévus pour diriger après son passage dans le troisième module (130; 230; 330) l'air comburant réchauffé et humidifié vers le premier module (110; 210; 310) afin de permettre au sein du brûleur (112; 212; 312) un mélange de l'air réchauffé et humidifié et du gaz combustible.

2. Chaudière selon la revendication 1, caractérisé en ce que le circuit d'eau interne (117; 217; 317) comprend des dispositifs (117a; 217a; 317a) d'introduction d'eau dans la partie haute du foyer humide (111; 211; 311) et des dispositifs (117b; 117c; 217b; 217c; 317b, 317c) d'introduction d'eau en regard de parois latérales verticales du foyer, de manière à permettre une humidification de l'ensemble du flux de gaz de combustion du premier module et des parois verticales du foyer.

3. Chaudière selon la revendication 1 ou la revendication 2, caractérisée en ce que le circuit d'eau interne (117, 217; 317) comprend une réserve d'eau (115; 215; 309, 315;) à la partie inférieure du premier module (110; 210; 310), des moyens (116; 216; 316) d'évacuation du trop plein d'eau dans ladite réserve et des moyens (118, 119; 218, 219; 318, 319) de prélèvement d'eau dans ladite réserve pour alimenter ledit circuit d'eau interne (117; 217; 317).

4. Chaudière selon l'une quelconque des revendications 1 à 3, caractérisée en ce que le troisième module (130) comprend un échangeur (131) à membrane poreuse, hydrophile ou céramique poreuse, répartie en une ou plusieurs couches, chaque couche présentant une face en contact avec de l'air comburant introduit par ladite entrée d'air (102) et l'autre face en contact avec les gaz de combustion issus du deuxième module (120) pour réaliser la fonction d'échangeur massique et thermique.

5. Chaudière selon l'une quelconque des revendications 1 à 3, caractérisée en ce que le troisième module (230) comprend un échangeur tournant (231) du type en nid d'abeille, constitué d'une plaque ondulée (237) entre deux plaques plates (238) et enroulées sur elles-mêmes, placé verticalement, qui reçoit à sa partie inférieure (232) les gaz de combustion issus du deuxième module (220), et à sa partie supérieure de l'air comburant introduit par une entrée d'air (202), l'air comburant circulant à contre-courant des gaz de combustion vers lesdits moyens (203) pour diriger l'air comburant réchauffé et humidifié vers le premier module (210) tandis que les gaz de combustion sont évacués par une cheminée fixe (206) à la partie supérieure de l'échangeur tournant (231).

6. Chaudière selon la revendication 3, caractérisée en ce que le troisième module (330A, 330B) comprend d'une part un laveur-scrubber évaporateur (330A) qui est disposé sous le premier module (310) et est traversé de bas en haut par de l'air comburant introduit par ladite entrée d'air (302) à une extrémité de ce laveur-scrubber évaporateur (330A) pour être ensuite évacué par lesdits moyens (303) pour diriger l'air comburant réchauffé vers le premier module (310), de l'eau étant appliquée de haut en bas au laveur-scrubber évaporateur (330A) à partir de ladite réserve d'eau (309) située à la partie inférieure du premier module (310), et d'autre part un laveur-scrubber condenseur (330B) qui est disposé au-dessus du deuxième module (320) pour être traversé de bas en haut par les gaz de combustion sortant du deuxième module (320) et de haut en bas par de l'eau récupérée dans une réserve complémentaire (315) à l'issue de la traversée du laveur scrubber-évaporateur (330A).

7. Chaudière selon la revendication 6, caractérisée en ce qu'elle comprend une plaque ondulée (307) munie de perforations (308) situées au voisinage du sommet des ondulations, pour définir ladite réserve d'eau (309) au bas du foyer humide (311) et la distribution très divisée d'eau au-dessus du laveur-scrubber évaporateur (330A) sur l'ensemble de la section de celui-ci.

8. Chaudière selon la revendication 6 ou 7, caractérisée en ce qu'elle comprend des moyens de pompage (318) et de distribution (319, 336) pour alimenter à la fois le circuit d'eau (317) du premier module (310) et le circuit de distribution d'eau (336) dans le laveur-scrubber condenseur (330B) à partir de ladite réserve complémentaire (315) servant de bâche.

9. Chaudière selon l'une quelconque des revendications 6 à 8, caractérisée en ce qu'elle comprend une plaque ondulée (334) munie de perforations (335) situées au voisinage du sommet des ondulations, pour permettre le passage des gaz de combustion entre le deuxième module (320) comprenant un échangeur-condenseur (321) et le laveur-scrubber condenseur (330B) et simultanément orienter par un jeu de pente approprié l'écoulement de l'eau recueillie en partie basse du laveur-scrubber condenseur (330B) vers les parois verticales de la chaudière, afin d'éviter d'arroser l'échangeur-condenseur (321).

10. Chaudière selon l'une quelconque des revendications 1 à 9, caractérisée en ce que le brûleur (212) du premier module (110; 210; 310) comprend une ou plusieurs rampes munies d'orifices tournés vers le bas de telle sorte que les flammes soient orientées en direction de ladite réserve d'eau (115; 215; 309).

11. Chaudière selon l'une des revendications 1 à 10, caractérisée en ce que le circuit d'eau (117; 217; 317) du premier module (110; 210; 310) comprend des rampes de pulvérisation (117b, 117c; 217b, 217c; 317b, 317c) munies de buses de pulvérisation orientées vers l'ensemble des parois verticales de l'enceinte (101; 201; 301), les rampes de pulvérisation (117b, 117c; 217b, 217c; 317b, 317c) étant disposées à l'extérieur des rampes du brûleur (112; 212; 312).

12. Chaudière selon l'une quelconque des revendications 1 à 11, caractérisée en ce que le circuit de circulation du fluide de travail (125; 225; 325) est un circuit d'eau chaude destiné au chauffage ou à la production d'eau chaude sanitaire, et en ce que les températures à l'entrée et à la sortie de la partie de circuit (122; 222; 322) interne au deuxième module (120; 220; 320) sont respectivement de l'ordre de 60 à 80° C et de 80 à 95° C et de préférence respectivement voisines de 70° C et 90° C.

## Patentansprüche

1. Kessel (100), der zur Beheizung eines Arbeitsströmungsmittels bestimmt ist, mit einem Mantel (101;201;301), in dessen Inneres mindestens ein Teil (122;222;322) eines Umlaufkreises für Arbeitsströmungsmittel eindringt, und mit einer Brenneinrichtung (111;211;311), die im Inneren des Mantels (101;201;301) gelegen ist und in der ein verbrennbares Gas einer Verbrennung unterzogen wird, wobei der Kessel mindestens die folgenden Merkmale aufweist:
a) ein erstes Modul (110;210;310), das die Brenneinrichtung (111;211;311), einen Brenner (112;212;312), der vom genannten verbrennbaren Gas gespeist ist, und einen internen Wasserumlauf (117;217;317) enthält, um die Brenneinrichtung (111;211;311) zu befeuchten und ein erstes Niveau für Masseund Wärme-Austauschvorgänge zu erzeugen, die einer Verdampfung ohne Wärmeübergang zum Arbeitsströmungsmittel hin folgen,
b) ein zweites Modul (120;220;320), das einen Austauscher-Kondensator aufweist, der dem genannten Teil (122;222;322) des Umlaufkreises für Arbeitsströmungsmittel zugeordnet ist und die Verbrennungsgase empfängt, die mit Wasserdampf beladen sind und von der Brenneinrichtung des ersten Moduls (110;210;310) abgegeben werden, um ein zweites Niveau von Masse- und Wärme-Austauschvorgängen zu erzeugen, das zu einem äußeren Umlauf (125;225;325) für den Kreislauf von Arbeitsströmungsmittel Wärmeenergie überträgt, die im ersten Modul (110;210;310) erzeugt wird, ohne daß es eine unmittelbare Berührung zwischen dem Verbrennungsgas und dem Arbeitsströmungsmittel gibt, und
c) ein drittes Modul (130;230;330), das eine Wasserdampfpumpe (131;231;331,332) aufweist, die ein drittes Niveau von Masse- und Wärme-Austauschvorgängen zwischen den Verbrennungsgasen, die vom zweiten Modul (120;220;320) ausgehen, und Verbrennungsluft sicherstellt, die in den Mantel (101;201; 301) durch einen Lufteintritt (102;202;302) eingeleitet wird, wobei Mittel (103;203;303) vorgesehen sind, um nach ihrem Durchtritt im dritten Modul (130;230;330) die aufgeheizte und angefeuchtete Verbrennungsluft dem ersten Modul (110;210;310) zuzuleiten, um innerhalb des Brenners (112;212;312) eine Mischung aus der aufgeheizten und angefeuchteten Luft und dem Verbrennungsgas zu ermöglichen.

2. Kessel nach Anspruch 1, dadurch gekennzeichnet, daß der interne Wasserumlauf (117;217;317) Vorrichtungen (117a;217a; 317a) zum Einleiten von Wasser in den oberen Teil der feuchten Brenneinrichtung (111;211;311) sowie Vorrichtungen (117b;117c; 217b;217c;317b,317c) zum Einleiten von Wasser gegenüber den seitlichen, vertikalen Wänden der Brenneinrichtung aufweist, um eine Anfeuchtung des gesamten Verbrennungsgasflusses des ersten Moduls und der vertikalen Wände der Brenneinrichtung zu gestatten.

3. Kessel nach Anspruch 1 oder Anspruch 2, dadurch gekennzeichnet, daß der interne Wasserumlauf (117,217;317) einen Wasservorrat (115;215;309,315) am unteren Teil des ersten Moduls (110;210;310), Mittel (116;216;316) zum Entfernen von zu viel Wasser in dem genannten Vorrat sowie Mittel (118,119; 218,219;318,319) zum Entnehmen von Wasser im genannten Vorrat aufweist, um den genannten internen Wasserumlauf (117;217;317) zu speisen.

4. Kessel nach irgendeinem der Ansprüche 1 bis 3, dadurch gekennzeichnet, daß das dritte Modul (130) einen Austauscher (131) mit poröser, hydrophiler oder keramisch-poröser Membran aufweist, die in eine oder mehrere Lagen unterteilt ist, wobei jede Lage eine Fläche zur Berührung mit Verbrennungsluft aufweist, die durch den genannten Lufteintritt (102) eingeleitet wird, und eine andere Fläche, die in Berührung mit den Verbrennungsgasen steht, die aus dem zweiten Modul (120) austreten, um die Funktion eines Masse- und Wärme-Austauschers zu verwirklichen.

5. Kessel nach irgendeinem der Ansprüche 1 bis 3, dadurch gekennzeichnet, daß das dritte Modul (230) einen rotierenden Wärmeaustauscher (231) aufweist, der von einer gewellten Platte (237) gebildet ist, die zwischen zwei Platten (238) angeordnet ist, die eben und auf sich selbst aufgerollt sind, und der vertikal angeordnet ist, an seinem unteren Teil (232) die Verbrennungsgase aufnimmt, die dem zweiten Modul (220) entstammen, und an seinem oberen Teil Verbrennungsluft, die durch einen Lufteintritt (202) eingeleitet wurde, wobei die Verbrennungsluft im Gegenstrom zu den Verbrennungsgasen zu den genannten Mitteln (203) hin umläuft, um die erwärmte und angefeuchtete Verbrennungsluft dem ersten Modul (210) zuzuführen, während die Verbrennungsgase durch einen festen Kamin (206) an den oberen Teil des rotierenden Austauschers (231) abgeleitet werden.

6. Kessel nach Anspruch 3, dadurch gekennzeichnet, daß das dritte Modul (330A,330B) einerseits eine Gaswasch- und Verdampfungseinrichtung (330A) aufweist, die unter dem ersten Modul (310) angeordnet ist und die von unten nach oben von der Verbrennungsluft durchquert wird, die durch den genannten Lufteintritt (302) am einen Ende dieser Gaswasch- und Verdampfungseinrichtung (330A) eingeleitet wird, um nachfolgend durch die genannten Mittel (303) abgeleitet zu werden, um die erwärmte Verbrennungsluft dem ersten Modul (310) zuzuführen, wobei Wasser von oben nach unten der Gaswasch- und Verdampfungseinrichtung (330A) aus dem genannten Wasservorrat (309) zugeführt wird, der am unteren Teil des ersten Moduls (310) angeordnet ist, und andererseits eine Gaswasch- und Kondensiereinrichtung (330B), die über dem zweiten Modul (320) angeordnet ist, um von unten nach oben von den Verbrennungsgasen durchquert zu werden, die aus dem zweiten Modul (320) austreten, und von oben nach unten von Wasser, das in einem ergänzenden Vorrat (315) am Austritt des Durchlaufs der Gaswasch- und Verdampfungseinrichtung (330A) rückgewonnen wird.

7. Kessel nach Anspruch 6, dadurch gekennzeichnet, daß er eine gewellte Platte (307) aufweist, die mit Perforierungen (308) versehen ist, die in der Nähe des Scheitels der Wellungen gelegen sind, um den genannten Wasservorrat (309) auf der Unterseite der feuchten Brenneinrichtung (311), sowie die hochverteilte Ausgabe von Wasser über der Gaswasch- und Verdampfungseinrichtung (330A) über den gesamten Querschnitt dieser hinweg zu bilden.

8. Kessel nach Anspruch 6 oder 7, dadurch gekennzeichnet, daß er Mittel zum Pumpen (318) und zur Ausgabe (319,336) aufweist, um gleichzeitig den Wasserumlauf (317) des ersten Moduls (310) und den Umlauf zur Ausgabe von Wasser (336) in der Gaswaschund Kondensiereinrichtung (330B) aus dem genannten, ergänzenden Vorrat (315) zu speisen, der als Sammelbehälter dient.

9. Kessel nach irgendeinem der Ansprüche 6 bis 8, dadurch gekennzeichnet, daß er eine gewellte Platte (334) aufweist, die mit Perforierungen (335) versehen ist, die in der Nähe des Scheitels der Wellungen gelegen sind, um den Durchtritt von Verbrennungsgas zwischen dem zweiten Modul (320), das eine Austausch- und Kondensiereinrichtung (321) aufweist, und der Gaswasch- und Kondensiereinrichtung (330B) zu gestatten, und um gleichzeitig durch eine geeignete Neigungsausbildung den Ablauf des Wassers, das im unteren Teil der Gaswasch- und Kondensiereinrichtung (330B) wiedergewonnen wurde, zu den vertikalen Wänden des Kessels zu lenken, um es zu vermeiden, die Austausch- und Kodensiereinrichtung (321) zu befeuchten.

10. Kessel nach irgendeinem der Ansprüche 1 bis 9, dadurch gekennzeichnet, daß der Brenner (212) des ersten Moduls (110; 210;310) eine oder mehrere Galerien aufweist, die mit Öffnungen versehen sind, die derart nach unten gedreht sind, daß die Flammen in Richtung des genannten Wasservorrates (115;215;309) gerichtet sind.

11. Kessel nach irgendeinem der Ansprüche 1 bis 10, dadurch gekennzeichnet, daß der Wasserumlauf (117;217;317) des ersten Moduls (110;210;310) Zerstäubungsgalerien ((117b,117c;217b, 217c;317b,317c) aufweist, die mit Zerstäubungsdüsen versehen sind, die gegen die Gesamtheit der vertikalen Wände des Mantels (101;201,301) gerichtet sind, wobei die Zerstäubungsgalerien (117b,117c;217b,217c;317b,317c) zur Außenseite der Galerien des Brenners (112;212;312) gerichtet sind.

12. Kessel nach irgendeinem der Ansprüche 1 bis 11, dadurch gekennzeichnet, daß der Umlauf für den Arbeitsströmungsmittelkreislauf (125;225;325) ein Warmwasserumlauf ist, der zur Heizung oder zur Erzeugung von warmem Wasser für Sanitärzwecke bestimmt ist, und daß die Temperaturen am Eintritt und am Austritt des Teiles des Umlaufs (122;222;322), der im Inneren des zweiten Moduls (120;220;320) liegt, jeweils in der Größenordnung von 60 bis 80°C und von 80 bis 95°C und bevorzugt jeweils nahe 70°C und 90°C liegen.

## Claims

1. A boiler (100) for heating a working fluid, the boiler comprising an enclosure (101; 201; 301) into which there penetrates at least one circuit portion (122; 222; 322) for circulating the working fluid, and a hearth (111; 211; 311) which is situated inside the enclosure (101; 201; 301) and in which a fuel gas is subjected to combustion, the boiler comprising at least:
a) a first module (110; 210; 310) containing the hearth (111; 211; 311), a burner (112; 212; 312) fed by said fuel gas, and an internal water circuit (117, 217; 317) for wetting the hearth (111; 211; 311) and creating a first level of mass and heat exchange due to vaporization without heat transfer to the working fluid;
b) a second module (120; 220, 320) comprising an exchanger-condenser associated with said circuit portion (122; 222; 322) for circulating the working fluid and receiving the combustion gases laden with water vapor coming from the hearth of the first module (110; 210; 310) to create a second level of mass and heat exchange due to condensation transferring the heat energy produced in the first module (110; 210; 310) to an external circuit (125; 225; 325) for working fluid circulation without there being direct contact between the combustion gases and the working fluid; and
c) a third module (130; 230; 330) comprising a water vapor pump (131; 231; 331, 332) providing a third level of mass and heat exchange between the combustion gases coming from the second module (120; 220; 320) and the oxidizing air injected into the enclosure (101; 201; 301) via an air inlet (102; 202; 302), means (103; 203; 303) being provided to direct the oxidizing air to the first module (110; 210; 310) after it has been heated and wetted by passing through the third module (130; 230; 330), thereby enabling the heated and wetted air to be mixed inside the burner (112; 212; 312) with the fuel gas.

2. A boiler according to claim 1, characterised in that the internal water circuit (117; 217; 317) comprises devices (117a; 217a; 317a) for injecting water into the top of the wet hearth (111; 211; 311) and devices (117b; 117c; 217b: 217c; 317b, 317c) for projecting water against the vertical side walls of the hearth so as to wet all of the flow of combustion gas in the first module and the vertical walls of the hearth.

3. A boiler according to claim 1 or claim 2, characterised in that the internal water circuit (117; 217; 317) comprises a supply of water (115; 215; 309, 315) at the bottom of the first module (110; 210; 310), overflow means (116; 216; 316) for removing excess water from said supply, and means (118, 119; 218, 219; 318, 319) for taking water from said supply to feed said internal water circuit (117; 217; 317).

4. A boiler according to any one of claims 1 to 3, characterised in that the third module (130) comprises an exchanger (131) having a porous ceramic, hydrophilic, or porous membrane organised in one or more layers, each layer having one face in contact with the oxidizing air injected via said air inlet (102) and its other face in contact with the combustion gases coming from the second module (120) to perform the mass and heat exchange function.

5. A boiler according to any one of claims 1 to 3, characterised in that the third module (230) comprises a rotary exchanger (231) of the honeycomb type constituted by a corrugated plate (237) between two flat plates (238) that are rolled up together, the exchanger being placed vertically, receiving at its bottom end (232) the combustion gases from the second module (220) and at its top end the oxidizing air injected via an air inlet (202), with the oxidizing air flowing as a counterflow to the combustion gases towards said means (203) for directing the heated and wetted oxidizing air towards the first module (210), while the combustion gases are exhausted via a stationary chimney (206) at the top of the rotary exchanger (231).

6. A boiler according to claim 3, characterised in that the third module (330A, 330B) comprises firstly a scrubber-evaporator (330A) disposed beneath the first module (310) and having oxidizing air passing upwards through it from said air inlet (302) located at one end of said scrubber-evaporator (330A) to be subsequently exhausted by said means (303) for directing heated oxidizing air towards the first module (310), water being applied downwardly to the scrubber-evaporator (330A) from said supply of water (309) situated at the bottom of the first module (310), and secondly a scrubber-condenser (330B) disposed above the second module (320) so that the combustion gases leaving the second module (320) pass upwardly through it, and so that the water recovered in an additional supply (315) after passing through the scrubber-evaporator (330A) passes through it downwardly.

7. A boiler according to claim 6, characterised in that it includes a corrugated plate (307) provided with perforations (308) situated near the tops of the corrugations to define said supply of water (309) at the bottom of the wet hearth (311) and for dispensing the water in highly divided form over the entire section of the scrubber-evaporator (330A).

8. A boiler according to claim 6 or 7, characterised in that it includes pumping means (318) and dispensing means (319, 336) for feeding both the water circuit (317) of the first module (310) and the water dispensing circuit (336) in the scrubber-condenser (330B) from said additional supply (315) which acts as a "hydraulic return".

9. A boiler according to any one of claims 6 to 8, characterised in that it includes a corrugated plate (334) having perforations (335) situated in the vicinity of the tops of the corrugations to allow the combustion gases to pass from the second module (320) containing an exchanger-condenser (321) to the scrubber-condenser (330B) while simultaneously taking the flow of water collected from the bottom of the scrubber-condenser (330B) and directing it in the form of an appropriately sloping jet against the vertical walls of the boiler so as to avoid showering water onto the exchanger-condenser (321).

10. A boiler according to any one of claims 1 to 9, characterised in that the burner (212) of the first module (110; 210; 310) comprises one or more strips provided with downwardly directed orifices so that the flames extend towards said supply of water (115; 215; 309).

11. A boiler according to any one of claims 1 to 10, characterised in that the water circuit (117; 217; 317) of the first module (110; 210; 310) comprises spray strips (117b, 117c; 217b, 217c; 317b, 317c) provided with spray nozzles directed to the various vertical walls of the enclosure (101; 201; 301), the spray strips (117b, 117c; 217b, 217c; 317b, 317c) being disposed externally relative to the strips of the burner (112; 212; 312).

12. A boiler according to any one of claims 1 to 11, characterised in that the circuit for circulating the working fluid (125; 225; 325) is a hot water circuit for central heating or for producing hot tap water, and in that the inlet and outlet temperatures of the circuit portion (122; 222; 322) internal to the second module (120; 220; 320) are respectively about 60°C to about 80°C, and about 80°C to about 95°C, and are preferably respectively approximately 70°C and 90°C.
